# EUROPÄISCHE PATENTSCHRIFT

(11) **EP 2 606 565 B1**
(45) Veröffentlichungstag und Bekanntmachung des Hinweises auf die Patenterteilung: **06.06.2018**
(21) Anmeldenummer: 11770071.6
(22) Anmeldetag: 28.09.2011
(51) Int. Cl.: H02M 3/158, H02M 3/335

(54) **ELEKTRISCHER DC/DC-WANDLER FÜR EINE MOBILE ANWENDUNG**
ELECTRIC DC/DC-CONVERTER FOR A MOBILE APPLICATION
CONVERTISSEUR ÉLECTRIQUE DE COURANT CONTINU EN COURANT CONTINU POUR UNE APPLICATION MOBILE

(30) Priorität: 29.09.2010 DE 102010041625
(43) Veröffentlichungstag der Anmeldung: 26.06.2013
(73) Patentinhaber: Siemens Aktiengesellschaft, 80333 München (DE)
(72) Erfinder: CORDES, Ralf, 91056 Erlangen (DE); KOMMA, Thomas, 85521 Ottobrunn (DE)
(86) Internationale Anmeldenummer: PCT/EP2011/066828
(87) Internationale Veröffentlichungsnummer: WO 2012/041888

(56) Entgegenhaltungen:
- WO-A2-2009/060806
- DE-T5-112006 002 698
- US-A- 4 408 267
- US-A1- 2006 290 332
- THOUNTHONG P ET AL: "Fuel cell high-power applications", IEEE INDUSTRIAL ELECTRONICS MAGAZINE, IEEE, US, Bd. 3, Nr. 1, 1. März 2009 (2009-03-01), Seiten 32-46, XP011280986, ISSN: 1932-4529, DOI: 10.1109/MIE.2008.930365

## Beschreibung

Die Erfindung betrifft einen elektrischen Wandler, speziell einen DC/DC-Wandler, für den Einsatz in einer mobilen Anwendung wie beispielsweise auf einem Schiff.

Der Einsatz von Brennstoffzellen für die elektrische Versorgung von Schiffen und Schiffsantrieben erfährt eine zunehmende Verbreitung. Die elektrische Spannung, die an den Ausgängen der Brennstoffzelle anliegt, wird dann bevorzugt über einen DC/DC-Wandler and die im Bordnetz des Schiffs gewünschte Betriebsspannung angepasst. Ein Akkumulator, der mit den Ausgängen des DC/DC-Wandlers verbunden ist, übernimmt eine Pufferung elektrischer Energie. Diese ist vorteilhaft, da die Brennstoffzelle nur relativ langsame Änderungen der abgegebenen Leistung erlaubt. Im Weiteren sind parallel zum Akkumulator beispielsweise ein oder mehrere Schiffsmotoren und das restliche Bordnetz angeschlossen.

DC/DC-Wandler für Brennstoffzellen auf Schiffen arbeiten dabei in einem Leistungsbereich bis zu einigen 100 kW. Für diese Leistungsklasse werden vorzugsweise DC/DC-Wandler basierend auf der IGBT-Technik (IGBT = Insulated Gate Bipolar Transistor) verwendet. Diese Halbleiterbauelemente weisen eine hohe Stromtragfähigkeit bei gleichzeitig hoher möglicher Spannungsbelastung auf. Das erlaubt wiederum, die gesamte benötigte Leistung mit einem einzigen DC/DC-Wandler zur Verfügung zu stellen. Nachteilig ist, dass mit dieser Technologie aufgrund hoher Schaltverluste nur relativ geringe Schaltfrequenzen von weniger als 20 kHz erreicht werden, was zu großen Abmessungen der passiven Bauelemente wie Kondensatoren, Induktivitäten und Transformatoren führt.

In einem bekannten Aufbau gemäß der DE 11 2006 002 698 T5 wird eine Mehrzahl von DC/DC-Wandler parallel geschaltet und gekoppelt betrieben. Diese sind derart aufgebaut, dass sie eine gemeinsame Induktivität am Ein-/Ausgang verwenden. Weiterhin werden die DC/DC-Wandler der DE 11 2006 002 698 T5 mit einem Phasenversatz getaktet betrieben. Durch den abhängigen Betrieb werden Bauteilgrößen (C und L) reduziert.

Nachteilig ist, dass induktive Bauelemente in dieser Leistungsklasse und Frequenz mit vergleichsweise hohen magnetischen Flussdichten im Kern betrieben werden, um die hohen Leistungen in einem akzeptablen Volumen zu übertragen. Das führt zwangsläufig zu hohen Streufeldern, die Abschirmmaßnahmen erforderlich machen können.

Ein weiterer Nachteil des bekannten Aufbaus besteht darin, dass die niedrigen Schaltfrequenzen eine hörbare Geräuschbildung bedeuten. Bei einem Einsatz des Schiffes als Forschungsschiff können die Geräusche Messungen im Wasser behindern. Weiterhin können die Geräusche Meerestiere stören. Hierdurch kann beispielsweise aus Tierschutzgründen der Bewegungsradius von Kreuzfahrtschiffen oder Fähren eingeschränkt werden. Im Fall von Unterwasserschiffen können die Geräusche zu einer erhöhten Detektierbarkeit des Unterwasserschiffes führen.

Schließlich besteht ein weiterer Nachteil darin, dass eine erhöhte Sicherheit des DC/DC-Wandlers, die beispielsweise über eine redundante Ausführung zu erreichen wäre, eine Verdoppelung oder Vervielfachung des DC/DC-Wandlers erfordert, was selbst bei dem Platzangebot von Schiffen problematisch ist.

Ein weiterer DC/DC-Wandler ist in CHEN R-T ET AL: "Modelling and controller design of inductor-coupled multimodule DC-DC convertor with master-slave current-comparing scheme",IEE PROCEEDINGS: ELECTRIC POWER APPLICATIONS, INSTITUTION OF ELECTRICAL ENGINEERS, GB, Bd. 152, Nr. 4, 20. Mai 2005 (2005-05-20), Seiten 977-989, XP006024138,ISSN: 1350-2352, DOI: 10.1049/IP-EPA:20045241 offenbart.

Es ist Aufgabe der vorliegenden Erfindung, einen elektrischen Wandler anzugeben, mit dem die genannten Probleme verringert oder behoben werden.

Diese Aufgabe wird durch einen DC/DC-Wandler mit den Merkmalen von Anspruch 1 gelöst. Vorteilhafte Ausgestaltungen sind Gegenstand der Unteransprüche.

Der erfindungsgemäße DC/DC-Wandler für eine elektrische Versorgung in einer mobilen Anwendung weist eine Mehrzahl von Einzelwandlern auf. Die Einzelwandler wiederum sind dabei jeweils ebenfalls DC/DC-Wandler. Die Einzelwandler sind weiterhin elektrisch parallel geschaltet und weisen jeweils Halbleiterschalter auf. Dabei umfasst jeder der Einzelwandler eine eigene Induktivität.

Zweckmäßig umfasst der DC/DC-Wandler eine Steuerungseinrichtung, die die Schaltvorgänge der Halbleiterschalter steuert. Die Steuerungseinrichtung ist zweckmäßig zentral für alle Einzelwandler ausgeführt. Alternativ kann auch eine Mehrzahl von separaten Steuerungen für jeden einzelnen der Einzelwandler vorgesehen sein. Beispielsweise können die Einzelwandler als Module mit einer jeweils eigenen Teilsteuerungseinrichtung ausgeführt sein, sodass die Steuerungseinrichtung nur übergeordnete Aufgaben wahrnehmen muss.

Der erfindungsgemäße DC/DC-Wandler stellt also in anderen Worten ein Array aus einer Mehrzahl kleinerer Einzelwandler dar. Bevorzugt werden dabei zwischen 10 und 20 Einzelwandler eingesetzt. Besonders vorteilhaft ist es, wenn die Leistung der Einzelwandler nicht größer als 10 kW ist. Es ist zweckmäßig, wenn die Einzelwandler so gestaltet sind, dass sie jeweils für eine geringere Leistung ausgelegt sind als der gesamte DC/DC-Wandler. Dabei ist es möglich, dass die zu erzielende Gesamtleistung, die sich aus der Notwendigkeit der Anwendung ergibt, genau der summierten Leistung der Einzelwandler entspricht. Damit wird schon erreicht, dass bei Ausfall eines Einzelwandlers lediglich beispielsweise 10% oder 5% der Gesamtleistung verlorengeht.

Auch ist es bei dem erfindungsgemäßen Wandler im Gegensatz zum Wandler der DE 11 2006 002 698 T5 vorteilhaft möglich, die Einzelwandler während des Betriebes abzuschalten oder sogar auszuwechseln, ohne das Gesamtsystem herunterfahren zu müssen.

Umgekehrt kann eine erhöhte Ausfallsicherheit nun vorteilhaft durch eine Redundanz erzeugt werden. Dabei wird beispielsweise die Anzahl an Einzelwandlern geringfügig erhöht gegenüber der Anzahl, die sich durch die notwendige Gesamtleistung ergibt. Beispielsweise könnten anstelle von 15 notwendigen Einzelwandlern 18 Einzelwandler verwendet werden. Insbesondere muss also die Anzahl der Einzelwandler nicht verdoppelt werden. Bei anderer Betrachtungsweise kann auch die Leistung der Einzelwandler so ausgelegt werden, dass die summierte Leistung größer also die zu erzielende Gesamtleistung ist, die sich aus der Notwendigkeit der Anwendung ergibt.

Gemäß einer besonders vorteilhaften Ausgestaltung der Erfindung weisen die Einzelwandler Halbleiterventile auf, die wenigstens teilweise MOSFETs sind. Mit anderen Worten werden die notwendigen Schaltvorgänge mit MOSFETs (Metal Oxide Semiconductor Field Effect Transistor) durchgeführt. Dies ist insbesondere ein Unterschied zu bekannten DC/DC-Wandlern für hohe Leistungen, bei denen bevorzugt IGBTs eingesetzt werden. MOSFETs können durch die Aufteilung des DC/DC-Wandlers in Einzelwandler von jeweils geringerer Leistung eingesetzt werden. MOSFETs weisen dabei vorteilhaft geringere Schaltverluste auf als IGBTs.

Besonders vorteilhaft ist es dabei, wenn die Steuerungseinrichtung ausgestaltet ist, eine Schaltfrequenz für die Halbleiterschalter zu verwenden, die größer als 20 kHz, insbesondere größer als 50 kHz ist. Dies ist möglich, da die MOSFETs geringere Schaltverluste aufweisen. Vorteilhaft ist daran, dass die erhöhte Frequenz außerhalb des hörbaren Bereichs ist. Insbesondere bei geräuschsensitiven Anwendungen wie den eingangs genannten ist diese Frequenzverschiebung von Vorteil. Gerade bei Passagierschiffen wird eine anderweitig nötige Geräuschdämmung oder -verminderung unnötig. Ein weiterer Vorteil besteht darin, dass die Baugröße passiver Elemente deutlich verringert werden kann.

Gemäß einer vorteilhaften Ausgestaltung und Weiterbildung der Erfindung ist die Steuerungseinrichtung ausgestaltet, Strommesswerte für den Stromfluss durch wenigstens einen Teil der Einzelwandler zu erfassen und aus den Strommesswerten heraus Schaltvorgänge der Halbleiterschalter zu steuern, um eine Steuerung des Gesamtausgangsstroms des DC/DC-Wandlers durchzuführen. Bevorzugt ist dafür beispielsweise im Ausgangsbereich wenigstens eines Teils der Einzelwandler eine Strommessvorrichtung vorgesehen. Bevorzugt ist die Strommessvorrichtung bei allen Einzelwandlern vorgesehen. Hierzu umfasst bevorzugt jeder der Einzelwandler einen Strommesswiderstand.

Diese Ausgestaltung der Steuerungseinrichtung erlaubt es, eine Überbelastung der Einzelwandler zu vermeiden und die Einzelwandler beispielsweise mit symmetrischer Belastung arbeiten zu lassen. Bei einer symmetrischen Belastung sind die Bauelemente der Einzelwandler, insbesondere die Halbleiterschalter, einer geringeren thermischen Belastung ausgesetzt. Das führt zu einer insgesamt verlängerten Lebensdauer und Ausfallsicherheit des DC/DC-Wandlers. Auch der mechanische Aufbau ist vereinfacht. Zweckmäßig werden die Einschaltzeiten der Halbleiterschalter eines Einzelwandlers vermindert, wenn ein geringerer Strom und damit eine geringere Belastung des Einzelwandlers erreicht werden soll.

Die Einzelwandler sind gemäß einer bevorzugten Ausgestaltung der Erfindung jeweils galvanisch entkoppelt ausgeführt, weisen also mit anderen Worten jeweils wenigstens einen Transformator auf. Beispielsweise können die Einzelwandler als Gegentaktflusswandler mit Vollbrückenansteuerung aufgebaut sein.

Der DC/DC-Wandler mit den Einzelwandlern ist bevorzugt Teil eines Energieversorgungssystems, insbesondere, wenn das Energieversorgungssystem eine Brennstoffzelle zur Erzeugung elektrischer Energie aufweist. Das Energieversorgungssystem ist beispielsweise in einem mobilen System realisiert. Beispiele für solche mobilen Systeme ist ein Schiff wie ein Forschungsschiff oder Passagierschiff. Ein weiteres Beispiel ist ein Unterseeboot. Eine Eingangsseite des DC/DC-Wandlers ist dabei zweckmäßig mit der Brennstoffzelle verbunden. Eine Ausgangsseite des DC/DC-Wandlers ist zweckmäßig mit Lasten wie beispielsweise Elektromotoren oder weiteren Lasten eines Bordnetzes des mobilen Systems verbunden.

Bevorzugte, jedoch keinesfalls einschränkende Ausführungsbeispiele für die Erfindung werden nunmehr anhand der Figuren der Zeichnung näher erläutert. Dabei sind die Merkmale schematisiert dargestellt. Es zeigen
Figur 1 einen stark schematisierten Aufbau eines elektrischen Versorgungssystems mit Brennstoffzelle gemäß dem Stand der Technik,
Figur 2 einen schematisierten Aufbau eines elektrischen Versorgungssystems mit Brennstoffzelle und DC/DC-Wandler mit Einzelwandlern und
Figur 3 ein Schaltbild eines Einzelwandlers, ausgebildet als Phase-Shift-Vollbrücke.

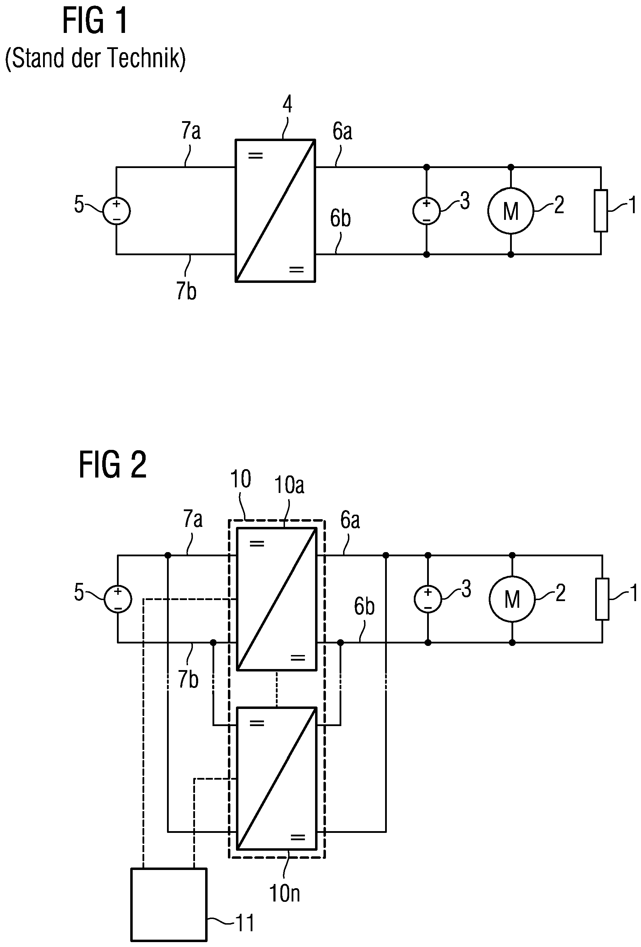

Der bekannte Grundaufbau gemäß der Figur 1 zeigt eine Brennstoffzelle 5. Die elektrische Spannung, die an den Ausgängen der Brennstoffzelle 5 anliegt, wird an die Eingangsanschlüsse 7a, b eines DC/DC-Wandlers 4 angeschlossen. Die Ausgangsanschlüsse 6a, b des DC/DC-Wandlers 4 sind mit einem Akkumulator 3 verbunden. Parallel zum Akkumulator 3 sind ein Elektromotor 2 und eine weitere Last 1, beispielsweise ein Bordnetz eines Schiffes oder eines anderen mobilen Systems angeschlossen. Der Akkumulator 3 sorgt für eine Zwischenspeicherung von Energie. Das ist vorteilhaft bei der Verwendung von Brennstoffzellen 5, da diese ihre abgegebene Leistung nur vergleichweise langsam ändern können. Kurzfristige Bedarfsschwankungen werden vorteilhaft über den Akkumulator 3 ausgeglichen.

Figur 2 zeigt eine beispielhafte Ausführung für den Grundaufbau mit einem beispielhaften Gleichspannungs-Wandler 10 gemäß der Erfindung. Der Gleichspannungswandler 10 umfasst in diesem Beispiel zwanzig Einzelwandler 10a...n. Die Einzelwandler 10a...n sind parallel geschaltet und weisen gemeinsame Eingangsanschlüsse 7a, b sowie gemeinsame Ausgangsanschlüsse 6a, b auf. Der Gleichspannungswandler 10 ist mit seinen Eingangsanschlüssen 7a, b wieder mit der Brennstoffzelle 5 verbunden. Mit seinen Ausgangsanschlüssen 6a, b ist der Gleichspannungswandler 10 mit dem Akkumulator 3 sowie beispielhaft mit dem Elektromotor 2 und der weiteren Last 1 verbunden.

Die zwanzig Einzelwandler 10a...n sind zur Steuerung mit einer Steuerungseinrichtung 11 gekoppelt. Die Steuerungseinrichtung 11 steuert die Schaltvorgänge der Schalter in den Einzelwandlern 10a...n. Weiterhin ist die Steuerungseinrichtung 11 mit je einem Strommesswiderstand 33 pro Einzelwandler 10a...n verbunden.

Die Steuerungseinrichtung 11 führt im Betrieb des Gleichspannungswandlers 10 einen aktiven Stromausgleich durch. Dafür erfasst sie die Werte für den Stromfluss durch die momentan im Betrieb befindlichen Einzelwandler 10a...n. Weisen die Stromflüsse Abweichungen von einem Normwert auf, regelt die Steuerungseinrichtung 11 die Schaltvorgänge für die Halbleiterschalter des betroffenen Einzelwandlers 10a...n nach. Fließt beispielsweise zuviel Strom durch einen Einzelwandler 10a...n, so werden die Einschaltdauern der Halbleiterschalter des betroffenen Einzelwandlers 10a...n heruntergesetzt. Insgesamt wird so eine symmetrische Verteilung, also Gleichverteilung der Last auf die Einzelwandler 10a...n realisiert.

Ebenso ist die Steuerungseinrichtung 11 ausgestaltet, den Ausfall eines Einzelwandlers 10a...n zu kompensieren. Hierzu regelt die Steuerungseinrichtung 11 die Einzelwandler 10a...n so, dass die verbleibenden neunzehn Einzelwandler 10a...n die gesamte benötigte Stromlast tragen. Falls das nicht geht, da beispielsweise die Lastgrenze erreicht ist, regelt die Steuerungseinrichtung 11 den abgegebenen Gesamtstrom herunter.

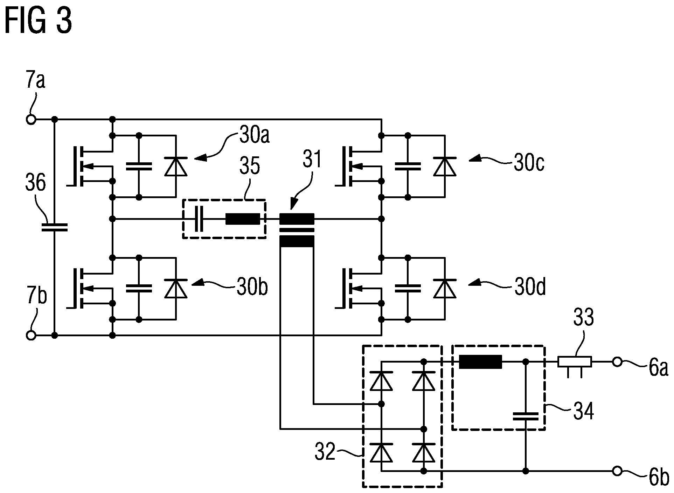

Der Aufbau eines Einzelwandlers 10a...n ist in Figur 3 schematisch dargestellt. Die Eingangsanschlüsse 7a, b sind mit einem Kondensator 36 gekoppelt. Darauf folgt eine Vollbrücke aus vier MOSFETs 30a...d, die in der Figur 3 mit ihren jeweiligen Streukapazitäten und Bodydiode dargestellt sind. Im Mittelsteg der Vollbrücke ist die Primärwicklung eines Übertragers 31 angeschlossen.

Zusätzlich umfasst der Mittelsteg in Reihe zur Primärwicklung des Übertragers 31 ein LC-Glied 35. Das LC-Glied 35 umfasst eine Serienschaltung aus einem Kondensator und einer Induktivität. Die Elemente des LC-Glieds 35 und die Primärwicklung sind mit den MOSFETs 30a...d so abgestimmt, dass sich eine Resonanzfrequenz von in diesem Beispiel 250 kHz ergibt. Der Kondensator sperrt nur den Gleichspannungsanteil. Die Sekundärwicklung des Übertragers 31 ist ihrerseits mit einem Diodenbrückengleichrichter 32 verbunden. Dessen Ausgang führt über einen Tiefpassfilter 34 aus serieller Induktivität und parallelem Kondensator zu den Ausgangsanschlüssen 6a, b. Dem Tiefpassfilter 34 nachgeschaltet ist dabei noch der Strommesswiderstand 33. Die Steuerungseinrichtung 11 ist zweckmäßig mit den MOSFETs 30a...d der Vollbrücke zu deren Steuerung sowie mit dem Strommesswiderstand 33 verbunden. Die Strommessung erfolgt ausgangsseitig.

## Patentansprüche

1. DC/DC-Wandler (10) für die elektrische Versorgung des Bordnetzes und/oder Antriebs eines Schiffs oder Unterseeboots aus einer Brennstoffzelle mit einer Mehrzahl an Einzelwandlern (10a...n), wobei die Einzelwandler (10a...n)
- jeweils DC/DC-Wandler sind,
- elektrisch parallel geschaltet sind und
- jeweils Halbleiterschalter (30a...d) aufweisen, die wenigstens teilweise MOSFETs (30a...d) sind,
- galvanisch entkoppelt ausgeführt sind, wobei der DC/DC-Wandler für die elektrische Versorgung weiterhin eine Steuerungseinrichtung umfasst, die ausgestaltet ist, eine Schaltfrequenz für die Halbleiterschalter (30a...d) zu verwenden, die größer als 50 kHz ist,
**gekennzeichnet dadurch, dass**
jeder Einzelwandler (10a...n) einen als Tiefpassfilter (34) ausgebildeten Ausgangsfilter bestehend aus einer eigenen seriellen Induktivität und parallelem Kondensator und einen dem Tiefpassfilter nachgeschalteten Strommesswiderstand (33) für eine ausgangsseitige Strommessung umfasst.

2. DC/DC-Wandler (10) gemäß Anspruch 1, bei dem die Steuerungseinrichtung (11) ausgestaltet ist, Strommesswerte für den Stromfluss durch wenigstens einen Teil der Einzelwandler (10a...n) zu erfassen und aus den Strommesswerten heraus Schaltvorgänge der Halbleiterschalter (30a...d) zu steuern, um eine Steuerung des Gesamtausgangsstroms des DC/DC-Wandlers (10) durchzuführen.

3. DC/DC-Wandler (10) gemäß einem der vorangehenden Ansprüche, bei dem die Einzelwandler (10a...n) als Gegentaktflusswandler mit Vollbrückenansteuerung aufgebaut sind.

## Claims

1. DC/DC converter (10) for the electrical supply of the electric system and/or propulsion unit of a ship or submarine from a fuel cell with a plurality of individual converters (10a...n), wherein the individual converters (10a...n)
- are each DC/DC converters,
- are electrically connected in parallel and
- respectively have semiconductor switches (30a...d) which are at least partially MOSFETs (30a...d),
- are galvanically isolated,
wherein the DC/DC converter for the electrical supply furthermore comprises a control system which is designed to use a switching frequency for the semiconductor switches (30a...d) which is greater than 50 kHz,
**characterised in that**
each individual converter (10a...n) comprises an output filter, embodied as a low-pass filter (34) and consisting of a separate serial inductor and parallel capacitor, and a current sensing resistor (33) for an output-side current measurement that is connected downstream of the low-pass filter.

2. DC/DC converter (10) according to claim 1, in which the control system (11) is designed to record current measured values for the current flow through at least some of the individual converters (10a...n) and to control switching operations of the semiconductor switches (30a...d) from the current measured values in order to control the total output current of the DC/DC converter (10).

3. DC/DC converter (10) according to one of the preceding claims, in which the individual converters (10a...n) are designed as push-pull converters with full bridge control.

## Revendications

1. Convertisseur (10) courant continu/courant continu pour l'alimentation en électricité du réseau de bord et/ou de la propulsion d'un bateau ou d'un sous-marin à partir d'une pile à combustible, comprenant une pluralité de convertisseurs (10a...n) individuels, les convertisseurs (10a...n) individuels
- sont chacun des convertisseurs courant continu/courant continu,
- sont montés en parallèle du point de vue électrique et
- ont chacun un commutateur (30a...d ) à semi-conducteur, qui est, au moins en partie, un MOSFET (30a...d),
- sont réalisés en étant découplés galvaniquement,
dans lequel le convertisseur courant continu/courant continu, pour l'alimentation en électricité, comprend en outre un dispositif de commande conformé pour utiliser une fréquence de commutation des commutateurs (30a...d) à semi-conducteur plus haute que 50 kHz,
**caractérisé en ce que**
chaque convertisseur (10a...n) individuel comprend un filtre de sortie, constitué en filtre (34) passe-bas et constitué d'une inductance série propre et d'un condensateur en parallèle, et une résistance (33) de mesure du courant montée après le filtre passe-bas, afin de mesurer le courant du côté de la sortie.

2. Convertisseur (10) courant continu/courant continu suivant la revendication 1, dans lequel le dispositif (11) de commande est conformé pour détecter des valeurs de mesure de courant, pour le flux de courant passant dans au moins une partie des convertisseurs (10a...n) individuels, et pour, à partir des valeurs de mesure du courant, commander les opérations de commutation des commutateurs (30a...d) à semi-conducteur, afin d'effectuer une commande du courant total de sortie du convertisseur (10) courant continu/courant continu.

3. Convertisseur (10) courant continu/courant continu suivant l'une des revendications précédentes, dans lequel les convertisseurs (10a...n) individuels sont constitués sous la forme de convertisseurs push pull à commande par pont complet.
